# EUROPÄISCHE PATENTSCHRIFT

(11) **EP 3 120 121 B1**
(45) Veröffentlichungstag und Bekanntmachung des Hinweises auf die Patenterteilung: **02.06.2021**
(21) Anmeldenummer: 14761979.5
(22) Anmeldetag: 04.09.2014
(51) Int. Cl.: G01F 23/284, G01F 23/296, G01F 23/00, G01S 13/88, G01S 7/52, G01S 7/40, G01S 15/88

(54) **TRAGBARE VORRICHTUNG ZUM AUSRICHTEN EINES FÜLLSTANDMESSGERÄTES AN EINEM BEHÄLTER**
PORTABLE DEVICE FOR ORIENTING A FILL-LEVEL MEASURING DEVICE ON A CONTAINER
DISPOSITIF PORTATIF POUR L'ALIGNEMENT D'UN APPAREIL DE MESURE DU NIVEAU DE REMPLISSAGE PORTÉ PAR UN RÉCIPIENT

(30) Priorität: 20.03.2014 WO PCT/EP2014/055636
(43) Veröffentlichungstag der Anmeldung: 25.01.2017
(73) Patentinhaber: VEGA Grieshaber KG, 77709 Wolfach (DE)
(72) Erfinder: SKOWAISA, Jürgen, 77761 Schiltach (DE)
(74) Vertreter: Maiwald Patent- und Rechtsanwaltsgesellschaft mbH
(86) Internationale Anmeldenummer: PCT/EP2014/068883
(87) Internationale Veröffentlichungsnummer: WO 2015/139785

(56) Entgegenhaltungen:
- DE-A1-102004 041 857
- DE-A1-102010 064 394
- DE-A1-102012 108 462
- US-A1- 2007 199 365
- Chip-Redaktion: "Neue TV-Sender gefällig? Die kostenlose Android App SatFinder unterstützt Sie bei der Ausrichtung Ihrer Satellitenschüssel.", , 15. Mai 2013 (2013-05-15), XP055155494, Gefunden im Internet: URL:http://beste-apps.chip.de/android/app/ satfinder-android-app,com.esys.satfinder/ [gefunden am 2014-11-27]
- Chip-Redaktion: "Satellitenschüssel richtig ausrichten: Mithilfe der iPhone-App SatFinder kein Problem.", , 11. April 2013 (2013-04-11), XP055155495, Gefunden im Internet: URL:http://beste-apps.chip.de/ios/app/satf inder-iphone-app,397993104/ [gefunden am 2014-11-27]

## Beschreibung

### Querbezug zu verbundenen Anmeldungen

Diese Anmeldung beansprucht den Nutzen aus dem Anmeldetag der internationalen Anmeldung mit der Nummer PCT/EP2014/055636, die am 20. März 2014 eingereicht worden ist.

### Technisches Gebiet

Die vorliegende Erfindung betrifft das Ausrichten von Füllstandmessgeräten an Behältern. Insbesondere betrifft die vorliegende Erfindung eine tragbare Vorrichtung, ein Füllstandmesssystem, ein Verfahren, ein Programmelement, ein computerlesbares Medium sowie die Verwendung einer tragbaren Vorrichtung.

### Technischer Hintergrund

In der industriellen Füllstandmessung kann es relevant sein, dass Füllstandmessgeräte mit einer bestimmten Neigung an bzw. in einem Behälter montiert sind. Beispielsweise kann ein Schüttgutbehälter eine zylindrische Form mit einem spitz zulaufenden unteren Ende aufweisen. Ferner kann der Schüttgutbehälter in der Mitte des oberen Endes eine Einlassöffnung für das Schüttgut aufweisen. Aus diesem Grund kann eine seitlich versetzte Anordnung eines Füllstandmessgerätes am Schüttgutbehälter erforderlich sein. Damit das Füllstandmessgerät den Füllstand trotzdem bis zum untersten Punkt des Behälters messen kann, ist eine geneigte Installation des Füllstandmessgerätes erforderlich.

DE 10 2004 041 857 A1 beschreibt ein Verfahren und eine Vorrichtung zum Ausrichten eines Messgeräts, bei dem zwei Echokurven aus verschiedenen Raumrichtungen erfasst werden und eine Soll-Echokurve ausgewählt wird.

DE 10 2012 108 462 A1 beschreibt ein Verfahren, eine Vorrichtung und ein System zur laserbasierten Bestimmung des Füllstands eines Füllguts in einem Behälter.

DE 10 2010 064 394 A1 beschreibt ein Verfahren und eine Vorrichtung zum Ausrichten eines Messgeräts, wobei ein Neigungssensor in dem Messgerät integriert ist, der die Ausrichtung des Messgeräts an den Behälter ermittelt.

US 2007/0199365 A1 beschreibt eine Einrichtung zur Kalibrierung eines Messgerätes, wobei die Einrichtung abnehmbar an dem Füllstandmessgerät angebracht werden kann.

Chip-Redaktion: "Neue TV-Sender gefällig? Die kostenlose Android-App SatFinder unterstützt Sie bei der Ausrichtung Ihrer Satellitenschüssel" beschreibt eine Einrichtung einer TV-Sat-Antenne mithilfe eines Computerprogramms.

Chip-Redaktion: "Satellitenschüssel richtig ausrichten: Mithilfe der iPhone-App SatFinder kein Problem" beschreibt die Ausrichtung einer Satellitenschüssel mithilfe eines Smartphones.

### Zusammenfassung der Erfindung

Es ist eine Aufgabe der Erfindung, die Installation von Füllstandmessgeräten an Behältern zu vereinfachen.

Diese Aufgabe wird gelöst durch die Gegenstände der unabhängigen und nebengeordneten Ansprüche. Weiterbildungen und Ausführungsformen sind den abhängigen Ansprüchen, der Beschreibung sowie den Figuren zu entnehmen.

Ein erster Aspekt der Erfindung betrifft eine tragbare Vorrichtung zum Ausrichten eines Füllstandmessgerätes, das an bzw. in einem Behälter angebracht ist, welche einen Prozessor, einen Neigungssensor sowie eine Anzeigevorrichtung aufweist. Dabei ist der Prozessor zum Feststellen einer Neigung des Füllstandmessgerätes dazu ausgeführt, mittels des Neigungssensors eine Neigung der Vorrichtung zu bestimmen, wenn die Vorrichtung an dem Füllstandmessgerät anliegt. Ferner ist der Prozessor dazu ausgeführt, eine Abmessung des Behälters und eine relative Position des Füllstandmessgerätes zu dem Behälter festzustellen. Dies kann beispielsweise durch Benutzereingabe erfolgen. Basierend auf der Abmessung des Behälters, der relativen Position des Füllstandmessgerätes zu dem Behälter und der Neigung des Füllstandmessgerätes ist der Prozessor dazu ausgeführt, eine erforderliche Änderung einer Ausrichtung des Füllstandmessgerätes zu bestimmen. Außerdem ist der Prozessor dazu ausgeführt, ein Signal für eine Ausgabe der bestimmten erforderlichen Änderung der Ausrichtung des Füllstandmessgerätes an die Anzeigevorrichtung zu übertragen.

Mit anderen Worten wird beispielsweise eine tragbare Vorrichtung als Werkzeug zum Ausrichten eines Füllstandmessgerätes an einem Behälter bereitgestellt, in welche relevante Informationen zur Geometrie des Behälters sowie Informationen zum Einbauort des Füllstandmessgerätes eingegeben werden können. Diese Vorrichtung kann dann auf das Füllstandmessgerät aufgelegt oder seitlich daran angelegt werden und dann mittels eines Neigungssensors die Neigung der tragbaren Vorrichtung und des Füllstandmessgerätes bestimmen. Anschließend kann die tragbare Vorrichtung den Benutzer anleiten, wie er das Füllstandmessgerät ausrichten soll damit dass Füllstandmessgerät korrekt ausgerichtet ist. Auf diese Weise kann die Installation des Füllstandmessgerätes vereinfacht und beschleunigt werden. Ferner kann auch die Neuausrichtung, welche bei einer Wartung des Füllstandmessgerätes bzw. des Behälters erforderlich sein kann, vereinfacht und beschleunigt werden.

Beispielsweise kann unter Verwendung des in der tragbaren Vorrichtung integrierten Neigungssensors und der Eingabe der Behälterhöhe sowie des Abstandes zur Behältermitte eine direkte Ausrichtung des Sensors erfolgen. Die tragbare Vorrichtung kann dazu direkt auf das Gehäuse oder auf eine in fester Relation zu einer Antenne des Füllstandmessgerätes oder zu einem Schallwandler stehende Fläche des Füllstandmessgerätes gelegt werden. Mithilfe der eingegebenen Abmessung kann eine sehr einfache und schnelle Ausrichtung des Füllstandmessgerätes erfolgen.

Unter dem Behälter kann im Kontext der Erfindung jede Form einer Aufnahmeeinrichtung und/oder Ablageeinrichtung, stationär oder beweglich, verstanden werden. Der Behälter kann eine Einrichtung oder ein räumliches Gebiet zum Aufbewahren eines Mediums oder eines Schüttgutes sein. Beispielsweise kann der Behälter eine Schüttguthalde, ein Silo oder ein Turm, ein Tank, ein Förderband, ein Überlauf, ein Überlaufbecken bzw. Sammelbecken bzw. Meeresbecken mit Wellenhöhenmessung, ein Einfüllschacht, ein Ofen, eine Pipeline oder ein offenes Gerinne sein. Ferner kann das Füllstandmessgerät auch zur Pegelmessung im Freien oder in Pegelrohren verwendet werden.

Mit anderen Worten kann unter dem Behälter eine Bezugsebene oder eine Senke mit einem Bezugspunkt verstanden werden. Beispielsweise kann unter dem Behälter ein offener oder geschlossener Behälter zur Aufnahme von festen oder flüssigen Stoffen verstanden werden. Unter dem Behälter kann ferner auch eine Halde verstanden werden, die beispielsweise in Kohlekraftwerken, an Ladestellen von Häfen, in Müllverbrennungsanlagen oder in Minen zum Einsatz kommt. In diesem Fall kann das Füllstandmessgerät dazu ausgeführt sein, die Schüttguthöhe oder die Füllguthöhe in der Halde zu messen. Beispielsweise kann das Füllstandmessgerät an einer dafür vorgesehenen Vorrichtung oder einem Stativ befestigt sein. Das Füllstandmessgerät kann ferner auch an einem Kran, der zum Füllen bzw. Entladen der Halde vorgesehen ist, angebracht sein. Die tragbare Vorrichtung kann allgemein dazu verwendet werden, um ein Füllstandmessgerät bezüglich eines Bezugspunktes auszurichten.

Unter der tragbaren Vorrichtung kann zum Beispiel ein mobiles Endgerät, ein mobiler Computer, ein mobiles Telekommunikationsgerät oder ein Tablet-PC verstanden werden. Unter dem Füllstandmessgerät kann ein industrielles Füllstandmessgerät, welches beispielsweise eine berührungslose Füllstandmessung mittels Radar oder Ultraschall durchführen kann, verstanden werden. Dieses Füllstandmessgerät kann beispielsweise den Füllstand eines Mediums in einem Tank, einem Silo und/oder einem Schüttgutbehälter messen. Der Prozessor der tragbaren Vorrichtung kann beispielsweise als Mikrocontroller bzw. als Mikrochip ausgeführt sein. Der Neigungssensor der tragbaren Vorrichtung kann beispielsweise in Form eines Beschleunigungssensors ausgeführt sein. Zum Beispiel kann der Neigungssensor ein mikro-elektro-mechanisches Bauteil sein, welches eine Beschleunigung mittels einer Kapazitätsmessung und/oder einer elektrischen Widerstandsmessung ermitteln kann. Die Anzeigevorrichtung der tragbaren Vorrichtung kann als Bildschirm oder Display ausgeführt sein.

Unter dem Merkmal, dass der Prozessor zum Feststellen einer Neigung des Füllstandmessgerätes dazu ausgeführt ist, mittels des Neigungssensors eine Neigung der Vorrichtung zu bestimmen, wenn die Vorrichtung an dem Füllstandmessgerät anliegt, kann verstanden werden, dass die tragbare Vorrichtung zum Messen der Neigung des Füllstandmessgerätes auf einer Fläche des Füllstandmessgerätes aufgelegt wird. Diese Fläche des Füllstandmessgerätes kann beispielsweise in fester Relation zu einer Antenne des Füllstandmessgerätes stehen. Auf diese Weise kann der Prozessor durch das Messen der Neigung der tragbaren Vorrichtung auf die Neigung des Füllstandmessgerätes, und damit der Antenne, schließen. Mit anderen Worten kann der Prozessor dazu ausgeführt sein, die Neigung der tragbaren Vorrichtung vom Neigungssensor abzufragen. Dadurch wird der Prozessor in die Lage versetzt, eine Ist-Neigung oder einen Ist-Neigungswinkel zu bestimmen. Die Ist-Neigung ist die momentan ermittelte Neigung. Ferner kann der Prozessor auch dazu ausgeführt sein, auf eine Information bezüglich einer Neigung des Behälters zuzugreifen. Beispielsweise kann die Neigung des Behälters in die tragbare Vorrichtung eingegeben oder durch Anlegen der tragbaren Vorrichtung an den Behälter gemessen werden. In diesem Zusammenhang kann unter der Neigung beispielsweise ein Neigungswinkel verstanden werden. Ferner kann unter der Neigung auch eine Neigungsebene des Füllstandmessgerätes bzw. des Behälters verstanden werden. Diese Neigungsebene kann beispielsweise zwei Neigungswinkel umfassen.

Ferner kann der Prozessor dazu ausgeführt sein, eine Abmessung beziehungsweise eine Geometrie des Behälters festzustellen. Beispielsweise kann es sich bei der Abmessung des Behälters um die Höhe und/oder dessen Durchmesser des Behälters handeln. Ferner kann der Prozessor dazu ausgeführt sein, eine relative Position beziehungsweise einen Einbauort des Füllstandmessgerätes an dem Behälter festzustellen. Die relative Position des Füllstandmessgerätes zu dem Behälter kann beispielsweise ein Abstand des Füllstandmessgerätes von einer Mittelachse des Behälters sein. Beispielsweise kann der Prozessor die relative Position des Füllstandmessgerätes bezüglich des Behälters feststellen. Dabei kann der Prozessor die Abmessung des Behälters sowie die relative Position des Behälters aktiv und/oder passiv feststellen. Beispielsweise können die Abmessung des Behälters und/oder die relative Position des Füllstandmessgerätes mittels einer Eingabevorrichtung in die tragbare Vorrichtung eingegeben werden. Ferner kann der Prozessor die Abmessung des Behälters und/oder die relative Position des Füllstandmessgerätes mittels einer Datenbankanfrage ermitteln. Mit anderen Worten kann auf diese Weise eine Soll-Neigung, also eine einzustellende Neigung oder ein einzustellender Neigungswinkel des Füllstandmessgerätes indirekt ermittelt werden. In einem anderen Beispiel kann die Soll-Neigung durch eine Zielvorrichtung und/oder durch die tragbare Vorrichtung zum Ausrichten eines Füllstandmessgeräts selbst ermittelt werden.

Der Prozessor kann die erforderliche Änderung der Ausrichtung des Füllstandmessgerätes beispielsweise in Form einer Differenz zwischen einem bestehenden Neigungswinkel bzw. Ist-Neigungswinkel und einem Soll-Neigungswinkel des Füllstandmessgerätes bestimmen. Dabei kann der Soll-Neigungswinkel denjenigen Neigungswinkel des Füllstandmessgerätes bezeichnen, bei welchem das Füllstandmessgerät den Behälter bis zum untersten Punkt des Behälters ausleuchten kann bzw. den Füllstand bis zum untersten Punkt des Behälters messen kann.

Der Ist-Neigungswinkel kann den aktuellen Neigungswinkel des Füllstandmessgeräts bezeichnen. Somit kann der Ist-Neigungswinkel auch den aktuellen Neigungswinkel der tragbaren Vorrichtung bezeichnen, wenn sie an dem Füllstandmessgerät anliegt und/oder an dem Füllstandmessgerät angebracht ist. Beispielsweise kann es sich bei dem Behälter um einen zylindrischen Behälter mit einem spitz zulaufenden unteren Ende handeln. In diesem Fall kann die Soll-Ausrichtung des Füllstandmessgerätes derart sein, dass bei Ausrichtung des Füllstandmessgeräts an dem Soll-Neigungswinkel oder an der Soll-Ausrichtung das Füllstandmessgerät in Richtung der unteren Behälterspitze zeigt. Die Richtung, Ausrichtung oder Orientierung eines Füllstandmessgeräts mag durch eine Längsachse des Füllstandmessgeräts und/oder durch eine Strahlrichtung des Füllstandmessgeräts vorgegeben sein. Um den Neigungswinkel des Füllstandmessgerätes an dem Behälter einzustellen, kann das Füllstandmessgerät mit einer verstellbaren Montageeinrichtung zum verstellen des Neigungswinkels des Füllstandmessgerätes versehen sein. Dabei kann der Prozessor diese erforderliche Änderung der Ausrichtung des Füllstandmessgerätes durch eine Berechnung und/oder durch ein Auslesen aus einer Tabelle, die in einer Speichereinheit der tragbaren Vorrichtung gespeichert ist, bestimmen, insbesondere durch einen Vergleich des Ist-Neigungswinkels mit dem Soll-Neigungswinkel.

Das Signal für die Ausgabe der bestimmten erforderlichen Änderung der Ausrichtung des Füllstandmessgerätes kann beispielsweise in Form eines elektrischen Signals, welches eine Anweisung zu einer solchen Ausgabe aufweist, ausgeführt sein.

Gemäß einer beispielhaften Ausführungsform der Erfindung ist der Prozessor dazu ausgeführt, ein Signal zum Darstellen einer Richtung der bestimmten erforderlichen Änderung der Ausrichtung des Füllstandmessgerätes an die Anzeigevorrichtung zu übertragen.

Zum Beispiel kann der Prozessor dazu ausgeführt sein, ein Signal zum Darstellen eines Pfeiles an die Anzeigevorrichtung zu übertragen, entlang dessen Richtung der Benutzer das Füllstandmessgerät neigen soll. Auf diese Weise kann auf der Anzeigevorrichtung der tragbaren Vorrichtung auf einfache Weise dargestellt werden, in welche Richtung das Füllstandmessgerät geneigt werden soll.

Gemäß einer weiteren beispielhaften Ausführungsform der Erfindung ist der Prozessor dazu ausgeführt, basierend auf der Abmessung des Behälters und der relativen Position des Füllstandmessgerätes zu dem Behälter eine Ausbreitung eines von dem Füllstandmessgerät ausgesendeten Messsignals in dem Behälter zu bestimmen. Ferner ist der Prozessor dazu ausgeführt, ein Signal zum Darstellen der bestimmten Ausbreitung des von dem Füllstandmessgerät ausgesendeten Messsignals in dem Behälter an die Anzeigevorrichtung zu übertragen.

Mit anderen Worten kann es sich bei dem Füllstandmessgerät um ein berührungslos messendes Füllstandmessgerät handeln, welches eine Antenne aufweisen kann. Das Füllstandmessgerät kann das Messsignal beispielsweise in Form eines Radar- und/oder Ultraschallsignals aussenden. Je nach Größe der Antenne oder Schallwandlers des Füllstandmessgerätes und der verwendeten Frequenz kann sich ein anderer Öffnungswinkel des Messsignals, auch Strahlkeule genannt, ergeben.

Auf diese Weise kann die Ausbreitung des Messsignals in dem Behälter für die Ausrichtung des Füllstandmessgerätes mitberücksichtigt werden.

Gemäß einer weiteren beispielhaften Ausführungsform der Erfindung ist der Prozessor dazu ausgeführt, einen Parameter des von dem Füllstandmessgerät ausgesendeten Signals festzustellen. Ferner ist der Prozessor dazu ausgeführt, basierend auf dem Parameter des von dem Füllstandmessgerät ausgesendeten Signals, der Abmessung des Behälters, der relativen Position des Füllstandmessgerätes zu dem Behälter und dem Neigungswinkel des Füllstandmessgerätes die Ausbreitung des von dem Füllstandmessgerät ausgesendeten Signals zu simulieren.

Mit anderen Worten kann mit der tragbaren Vorrichtung beispielsweise eine Simulation der Abstrahlcharakteristik eines Radar- oder Ultraschallfüllstandmessgerätes unter der Verwendung des bei dem Gerät vorhandenen Öffnungswinkels erfolgen. Dieser Öffnungswinkel kann dem Typ des Füllstandmessgerätes und der verwendeten Antennengröße eindeutig zugeordnet sein. Mit der Eingabe der Abmessung des Behälters und des Montageorts des Füllstandmessgerätes kann sehr einfach eine Aussage über die Möglichkeit von Störreflexionen durch Einbauten gemacht werden.

Dabei kann unter dem Parameter beispielsweise ein Öffnungswinkel des von dem Füllstandmessgerät ausgesendeten Sendekeule und/oder eine Antennengröße des Füllstandmessgerätes verstanden werden. Der Prozessor kann den Parameter zum Beispiel durch eine Benutzereingabe oder durch eine Datenbankabfrage feststellen. Das Simulieren der Ausbreitung des Messsignals in dem Behälter kann beispielsweise auf einem physikalischen Modell basieren. Ferner können für die Simulation weitere Informationen mit einbezogen werden. Beispielsweise kann die Behältergeometrie für die Simulation berücksichtigt werden. So kann zum Beispiel ein Einbauelement im Behälter berücksichtigt werden, von welchem Störechos ausgehen können. Damit können eventuell vorhandene Störeinflüsse frühzeitig erkannt werden.

Befinden sich Einbauten in dem Behälter, kann ein Teil der Sendeenergie des Füllstandmessgerätes an diesen Einbauten reflektiert werden, was zu einer Beeinträchtigung der Füllstandmessung führen kann. Um eine Information über die zu erwartenden Störreflexionen zu erhalten, kann die Ausbreitung des Messsignals mittels der tragbaren Vorrichtung unter Berücksichtigung eines oder mehrerer Behälterabmessungen bzw. Parameter des Füllstandmessgerätes, beispielsweise des Öffnungswinkels der Antennen oder Schallwandlers, simuliert werden.

Gemäß einer weiteren beispielhaften Ausführungsform der Erfindung umfasst die bestimmte Ausbreitung des Signals des Füllstandmessgerätes eine Sendekeule des Füllstandmessgerätes. Ferner ist der Prozessor dazu ausgeführt, ein Signal zum Darstellen der bestimmten Sendekeule in dem Behälter an die Anzeigevorrichtung zu übertragen.

Unter der Sendekeule des Füllstandmessgerätes kann beispielsweise ein Kegel des vom Füllstandmessgerät ausgesendeten Messsignals verstanden werden. Auf diese Weise kann eine übersichtliche Darstellung auf der Anzeigevorrichtung bereitgestellt werden, wie das Messsignal sich im Behälter in Abhängigkeit der Neigung des Füllstandmessgerätes ausbreitet.

Gemäß einer weiteren beispielhaften Ausführungsform der Erfindung weist die Vorrichtung eine Eingabevorrichtung auf. Der Prozessor ist dabei dazu ausgeführt, die Abmessung des Behälters und die relative Position des Füllstandmessgerätes zu dem Behälter über eine Eingabe in die Eingabevorrichtung festzustellen.

Mit anderen Worten kann der Prozessor dazu ausgeführt sein, die Abmessung des Behälters und die relative Position des Füllstandmessgerätes durch eine Benutzereingabe festzustellen.

Gemäß einer weiteren beispielhaften Ausführungsform der Erfindung ist der Prozessor dazu ausgeführt, die Abmessung des Behälters und/oder die relative Position des Füllstandmessgerätes zu dem Behälter durch Scannen eines Codes, vorzugsweise eines Strichcodes oder eines QR-Codes, festzustellen.

Dieser Code kann beispielweise an dem Behälter angebracht sein. Auf diese Weise kann die Vorrichtung schnell für den spezifischen Behälter konfiguriert werden, indem der an dem Behälter angebrachte Code mit der Vorrichtung eingescannt wird. Der Prozessor der Vorrichtung kann dann über eine Datenbankabfrage die Abmessung des Behälters und/oder die relative Position des Füllstandmessgerätes zu dem Behälter, die dem eingescannten Code entsprechen, ermitteln. Gemäß einer weiteren beispielhaften Ausführungsform der Erfindung weist die Vorrichtung zum Ausrichten eine Zielvorrichtung auf. Die Zielvorrichtung kann beispielsweise eine Kamera mit einer Markierung oder mit einer Libelle sein, mit der eine festgelegte Position in einem Behälter angezielt werden kann. Die Kamera kann dazu ausgeführt sein, ein Bild von einem Innenraum des Behälters zu erzeugen, das von einem ersten Programmelement der tragbaren Vorrichtung verarbeitet wird. Ein zweites Programmelement der tragbaren Vorrichtung ist dazu ausgeführt, eine Markierung, eine Libelle oder ein Fadenkreuz zu erzeugen. Die tragbare Vorrichtung oder ein Programmelement überlagert das erzeugte Bild mit der erzeugten Markierung, der Libelle oder dem Fadenkreuz, um im Bild anzuzeigen, welcher Punkt mit der tragbaren Vorrichtung anvisiert wird. Ferner mag die Zielvorrichtung einen Neigungsmesser aufweisen, der es ermöglicht, einen Neigungswinkel der Vorrichtung zum Ausrichten zum Ziel zu bestimmen. Der Prozessor mag dabei eingerichtet sein, aus dem ermittelten Neigungswinkel einen Soll-Neigungswinkel zu bestimmen.

Ein weiterer Aspekt der Erfindung betrifft eine weitere Ausführungsform der tragbaren Vorrichtung zum Ausrichten eines Füllstandmessgerätes an einem Behälter. Hierbei mag das Ausrichten des Füllstandmessgeräts an einem Behälter, nicht auf einem Ausrichten an einer geometrischen Form des Behälters beschränkt sein. Die Vorrichtung zum Ausrichten des Füllstandmessgeräts mag allgemein das freie Anbringen eines Füllstandmessgeräts an einem Behälter beschreiben, so dass jedoch das Füllstandmessgerät so ausgerichtet ist, dass eine vorgebbare Strahlausbreitung einer von dem Füllstandmessgerät erzeugten Strahlung möglich ist. Insbesondere mag sich das Feldgerät so ausrichten lassen, dass mittels der Strahlung ein vorgebbares Ziel innerhalb des Behälters erreichbar ist.

Die Vorrichtung weist einen Prozessor, einen Neigungssensor und eine Anzeigevorrichtung auf. Der Prozessor ist zum Feststellen einer Neigung des Füllstandmessgerätes dazu ausgeführt, mittels des Neigungssensors eine Neigung der Vorrichtung zu bestimmen, wenn die Vorrichtung an dem Füllstandmessgerät anliegt. D.h. der Neigungssensor mag eine Ausrichtung und insbesondere eine Neigung der tragbaren Vorrichtung im Raum ermitteln, die für den Fall, dass die tragbare Vorrichtung an dem Feldgerät angebracht ist, mit einer Neigung und/oder mit einer Ausrichtung des Feldgeräts in Verbindung stehen. Ferner ist der Prozessor dazu ausgeführt, einen einzustellenden Neigungswinkel des Füllstandmessgerätes zu bestimmen. Der einzustellende Neigungswinkel mag als Soll-Neigungswinkel bezeichnet werden. Weiter ist der Prozessor dazu ausgeführt, basierend auf dem einzustellenden Neigungswinkel des Füllstandmessgerätes und der Neigung des Füllstandmessgerätes eine erforderliche Änderung einer Ausrichtung des Füllstandmessgerätes zu bestimmen. Beispielsweise mag zur Bestimmung der Änderung ein Vergleich zwischen einem Ist-Neigungswinkel und einem Soll-Neigungswinkel angestellt werden und eine Abweichung der beiden Neigungswinkel voneinander ermittelt werden. Der Prozessor ist ferner dazu ausgeführt, ein Signal für eine Ausgabe der bestimmten erforderlichen Änderung der Ausrichtung des Füllstandmessgerätes an die Anzeigevorrichtung zu übertragen.

Mit anderen Worten kann eine alternative Ausführungsform der Erfindung darin gesehen werden, dass der Prozessor dazu ausgeführt ist, einen einzustellenden Neigungswinkel des Füllstandmessgerätes gegenüber einer gedachten Bezugslinie direkt zu bestimmen. Eine gedachte Bezugslinie kann eine Längsachse eines Behälters sein. Das direkte Bestimmen des Soll-Neigungswinkel, also das direkte Bestimmen des einzustellenden Neigungswinkels, mag den Soll-Neigungswinkel schneller bereitstellen als beispielsweise das indirekte Bereitstellen des Soll-Neigungswinkels. Ein indirektes Bereitstellen des Neigungswinkels mag gegeben sein, wenn der Soll-Neigungswinkel aus der Abmessung des Behälters bestimmt wird. Durch das direkte Bestimmen des einzustellenden Neigungswinkels kann das Füllstandmessgerät ausgerichtet werden, ohne dass die Abmessung des Behälters bekannt sein muss. Jedoch kann die tragbare Vorrichtung gemäß diesem Aspekt der Erfindung auch Merkmale aufweisen oder mit Merkmalen kombiniert werden, die im Kontext anderer Aspekte bzw. Ausführungsformen beschrieben sind. So kann der Prozessor dazu ausgeführt sein, ein Signal zum Darstellen einer Richtung der bestimmten erforderlichen Änderung der Ausrichtung des Füllstandmessgerätes an die Anzeigevorrichtung zu übertragen. Ferner kann der Prozessor dazu ausgeführt sein, ein Signal zum Darstellen einer Dosenlibelle, welche eine derzeitige Ausrichtung des Füllstandmessgerätes relativ zu einer erforderlichen Ausrichtung des Füllstandmessgerätes darstellt, an die Anzeigevorrichtung zu übertragen. D.h. die Art der Ermittlung des Soll-Neigungswinkels mag unabhängig von dem Verfahren sein, das genutzt wird, um das Feldgerät in Relation zu dem Behälter auszurichten.

Unter dem einzustellenden Neigungswinkel oder dem Soll-Neigungswinkel kann dabei ein Neigungswinkel verstanden werden, mit welchem das Füllstandmessgerät am Behälter ausgerichtet sein soll. D.h. unter dem einzustellenden Neigungswinkel kann ein Neigungswinkel verstanden werden, mit welchem das Füllstandmessgerät in Relation zu dem Behälter ausgerichtet sein soll. Insbesondere mag unter dem einzustellenden Neigungswinkel ein Neigungswinkel verstanden werden, der eine Ausrichtung einer Bezugslinie und/oder Bezugsebene des Füllstandmessgeräts im Verhältnis zu einer Ausrichtung einer Bezugslinie und/oder Bezugsebene des Behälters angibt. Beispielsweise kann der einzustellende Neigungswinkel derart gewählt sein, dass ein von dem Füllstandmessgerät ausgesendetes Signal in Richtung eines untersten Punkt des Behälters oder in Richtung eines Bezugspunktes eines Behälters ausgesendet wird, wie beispielsweise eines Auslasses des Behälters.

Der einzustellende Neigungswinkel kann mittels der tragbaren Vorrichtung bestimmt werden. Beispielsweise kann die tragbare Vorrichtung eine Zielvorrichtung aufweisen, mit welcher der gewünschte Punkt des Behälters, in dessen Richtung das Füllstandmessgerät ausgerichtet werden soll, angepeilt bzw. anvisiert werden kann. Der gewünschte Punkt kann ein Bezugspunkt des Behälters sein, beispielsweise der unterste Punkt des Behälters, der Ort des Behälters, der die weiteste Entfernung von einem Behälterdeckel oder von einer Behälteröffnung aufweist oder ein Auslass des Behälters.

Der Prozessor der tragbaren Vorrichtung kann dazu ausgeführt sein, einen momentanen Neigungswinkel der tragbaren Vorrichtung als einzustellenden Neigungswinkel zu verwenden, wenn die tragbare Vorrichtung den gewünschten Punkt anpeilt. Der momentane Neigungswinkel mag sich also in dem Moment ergeben, wenn der gewünschte Punkt angepeilt wird. Zum Beispiel kann der Prozessor den momentanen Neigungswinkel der tragbaren Vorrichtung auslesen, wenn ein an der Vorrichtung vorhandenes Bedienelement, beispielsweise ein Schalter oder Auslöser, betätigt wird. Das Bedienelement kann ferner ein sprachbasiertes und/oder eine gestenbasiertes Bedienelement sein. Das heißt der momentane Neigungswinkel kann auch mittels Gestensteuerung und/oder Sprachsteuerung als einzustellender Neigungswinkel bestimmt werden. Das Betätigen des Bedienelements kann auch das Speichern und/oder das Übertragen des momentanen Neigungswinkels auslösen. Dieser momentane Neigungswinkel mag direkt als Soll-Neigungswinkel verwendet werden, ohne dass hierfür Abmessungen des Behälters ausgewertet werden. Es mag jedoch nötig sein, feste Umrechnungen des momentanen Neigungswinkels zu dem Soll-Neigungswinkel vorzunehmen, da beispielsweise die Lage des Neigungssensors nicht mit der Zielrichtung übereinstimmen mag.

Beispielsweise kann der Prozessor dazu ausgeführt sein, mittels eines ersten Programmelementes den einzustellenden Neigungswinkel zu bestimmen und mittels eines zweiten Programmelementes die erforderliche Änderung der Ausrichtung des Füllstandmessgerätes zu bestimmen. Ferner können das erste Programmelement eine erste Schnittstelle und das zweite Programmelement eine zweite Schnittstelle aufweisen. Über die erste und zweite Schnittstelle können das erste Programmelement und das zweite Programmelement miteinander kommunizieren bzw. Daten an das jeweilig andere Programmelement übertragen. Beispielsweise kann das erste Programmelement den einzustellenden Neigungswinkel über die erste und zweite Schnittstelle an das zweite Programmelement zum Bestimmen der erforderlichen Änderung der Ausrichtung übertragen.

Der einzustellende Neigungswinkel kann ferner auch durch eine zweite Vorrichtung, die anstelle des Füllstandmessgerätes am Behälter montierbar ist und durch die tragbare Vorrichtung fernsteuerbar ist, bestimmt werden. In diesem Fall kann die zweite Vorrichtung den momentanen Neigungswinkel an die tragbare Vorrichtung übertragen. Die beiden Vorrichtungen können separate Vorrichtungen sein. Alternativ können die beiden Vorrichtungen in einer einzigen Vorrichtung integriert sein. Insbesondere mag es möglich sein, dass der selbe Neigungssensor sowohl zum Ermitteln des Soll-Neigungswinkels als auch zum Bestimmen des Ist-Neigungswinkels beim Ausrichten verwendet wird.

Die in diesem Zusammenhang beschriebene tragbare Vorrichtung kann das Montieren eines Füllstandmessgerätes, das an einer Wand oder Seiteinwand in Überkopfhöhe angebracht werden soll, vereinfachen bzw. ermöglichen.

Gemäß einer weiteren Ausführungsform beinhaltet die Vorrichtung eine Kamera zum Aufnehmen eines Bildes sowie ein Bedienelement. Der Prozessor ist dazu ausgeführt, in dem Bild eine Zielmarkierung oder eine Libelle zum Anpeilen eines gewünschten Punktes des Behälters zu erzeugen. Ferner ist der Prozessor dazu ausgeführt, ein Signal zum Darstellen des Bildes mit der Zielmarkierung an die Anzeigevorrichtung zu übertragen. Der Prozessor ist außerdem dazu ausgeführt, bei Betätigung des Bedienelementes einen momentanen Neigungswinkel der tragbaren Vorrichtung als einzustellender Neigungswinkel zu verwenden.

Mit anderen Worten kann die oben beschriebene Zielvorrichtung mittels der Kamera der tragbaren Vorrichtung realisiert sein. Die Zielmarkierung kann beispielsweise ein im Bild dargestelltes Fadenkreuz sein. Der Prozessor kann ferner dazu ausgeführt sein, mittels Bildstabilisierungsalgorithmen ein Verwackeln des Bildes zu minimieren. Auf diese Weise kann der einzustellende Neigungswinkel genauer bestimmt werden.

Ein weiterer Aspekt der Erfindung betrifft ein Füllstandmesssystem, welches eine tragbare Vorrichtung, welches im Kontext der vorliegenden Erfindung beschrieben ist, sowie ein Füllstandmessgerät mit einer Aufnahmevorrichtung für die tragbare Vorrichtung aufweist.

Diese Aufnahmevorrichtung des Füllstandmessgerätes kann beispielsweise in Form einer Anschlagkante ausgeführt sein, an welche die tragbare Vorrichtung angelegt werden kann. Ferner kann die Aufnahmevorrichtung auch in Form einer Spannvorrichtung ausgeführt sein, in welche die tragbare Vorrichtung aufgespannt wird. Auf diese Weise kann die relative Position der tragbaren Vorrichtung zum Füllstandmessgerät festgestellt werden. Durch die feste Ausrichtung der tragbaren Vorrichtung zum Füllstandmessgerät kann der Prozessor über die Neigung der tragbaren Vorrichtung auf die Neigung des Füllstandmessgerätes schließen.

Ein weiterer Aspekt der Erfindung betrifft ein Verfahren zum Ausrichten eines Füllstandmessgerätes an einem Behälter mit einer tragbaren Vorrichtung. Dabei weist das Verfahren den Schritt des Feststellens einer Abmessung des Behälters und einer relativen Position des Füllstandmessgerätes zum Behälter durch die tragbare Vorrichtung oder des Bestimmens eines einzustellenden Neigungswinkels des Füllstandmessgerätes an dem Behälter durch die tragbare Vorrichtung. Das Verfahren umfasst ferner den Schritt des Feststellens eines Neigungswinkels des Füllstandmessgerätes durch Messen eines Neigungswinkels durch die an das Füllstandmessgerät aufliegende tragbare Vorrichtung. Außerdem weist das Verfahren den Schritt des Bestimmens einer Änderung einer Ausrichtung des Füllstandmessgerätes basierend auf der Abmessung des Behälters, der relativen Position des Füllstandmessgerätes zu dem Behälter und des Neigungswinkels des Füllstandmessgerätes bzw. basierend auf dem einzustellenden Neigungswinkel und des Neigungswinkels des Füllstandmessgerätes durch die tragbare Vorrichtung auf. Das Verfahren umfasst ferner den Schritt der Ausgabe der berechneten Änderung der Ausrichtung des Füllstandmessgerätes durch die tragbare Vorrichtung.

Dabei können die Schritte des Verfahrens in der eingegebenen Reihenfolge, in einer anderen Reihenfolge oder parallel durchgeführt werden. Dieses Verfahren kann beispielsweise von einer tragbaren Vorrichtung, welche im Kontext der vorliegenden Erfindung beschrieben ist, durchgeführt werden. Merkmale und Vorteile, welche im Zusammenhang mit der Vorrichtung beschrieben sind, gelten auch im Zusammenhang mit dem Verfahren.

Ein weiterer Aspekt der Erfindung betrifft ein Programmelement, das, wenn es von einem Prozessor durchgeführt wird, den Prozessor anleitet, ein Verfahren gemäß einem im Kontext der vorliegenden Erfindung beschriebenen Verfahren durchzuführen.

Bei dem Programmelement kann es sich beispielsweise um ein Computerprogramm, um ein Update eines Computerprogramms oder um eine Applikation eines Tablet PCs oder eines mobile Funkgerätes beziehungsweise Smartphones handeln.

Ein weiterer Aspekt der Erfindung betrifft ein computerlesbares Medium, auf dem ein Programmelement gespeichert ist, das, wenn es von einem Prozessor durchgeführt wird, den Prozessor anleitet, ein im Kontext der vorliegenden Erfindung beschriebenes Verfahren durchzuführen.

Ein weiterer Aspekt der Erfindung betrifft die Verwendung eines mobilen Endgeräts zur Bestimmung einer erforderlichen Änderung einer Ausrichtung eines Füllstandmessgerätes an einem Behälter.

Ein weiterer Aspekt der Erfindung betrifft die Verwendung eines mobilen Endgerätes zur Bestimmung eines einzustellenden Neigungswinkels eines Füllstandmessgerätes an einem Behälter. In einem Beispiel mag das mobile Endgerät durch Laden einer Applikation oder App in die Lage versetzt werden, das erfindungsgemäße Verfahren auszuführen.

Dabei kann das mobile Endgerät in Form einer tragbaren Vorrichtung, eines mobilen Computers, eines Tablet-PCs bzw. eines Smartphones ausgeführt sein.

Weitere Merkmale, Vorteile und Anwendungsmöglichkeiten der Erfindung ergeben sich aus der nachfolgenden Beschreibung der Ausführungsbeispiele und Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen.

### Kurze Beschreibung der Figuren

Fig. 1 zeigt eine tragbare Vorrichtung gemäß einem Ausführungsbeispiel der Erfindung.
Fig. 2 zeigt ein Füllstandmesssystem und einen Behälter gemäß einem Ausführungsbeispiel der Erfindung.
Fig. 3 zeigt ein Füllstandmesssystem und einen Behälter gemäß einem Ausführungsbeispiel der Erfindung.
Fig. 4 zeigt ein Füllstandmesssystem gemäß einem Ausführungsbeispiel der Erfindung.
Fig. 5A und Fig. 5B zeigen jeweils eine Darstellung einer Anzeigevorrichtung einer nicht-erfindungsgemäßen tragbaren Vorrichtung.
Fig. 6 zeigt die Ausbreitung eines Messsignals gemäß einem Ausführungsbeispiel der Erfindung.
Fig. 7A und Fig. 7B zeigen jeweils die Ausbreitung eines Messsignals in einem Behälter gemäß einem Ausführungsbeispiel der Erfindung.
Fig. 8 zeigt ein Bild einer Anzeigevorrichtung gemäß einem Ausführungsbeispiel der Erfindung.
Fig. 9 zeigt ein Flussdiagramm für ein Verfahren gemäß einem Ausführungsbeispiel der Erfindung.
Fig. 10 zeigt einen Behälter mit einer tragbaren Vorrichtung gemäß einem Ausführungsbeispiel der Erfindung.
Fig. 11 zeigt ein auf einer Anzeigeeinheit einer tragbaren Vorrichtung gemäß einem Ausführungsbeispiel der Erfindung dargestellte Bildausgabe.

Die Figuren sind schematisch und nicht maßstabsgetreu dargestellt. Sind in der nachfolgenden Beschreibung in verschiedenen Figuren die gleichen Bezugszeichen angegeben, so bezeichnen diese gleiche oder ähnliche Elemente. Gleiche oder ähnliche Elemente können aber auch mit unterschiedlichen Bezugszeichen bezeichnet sein.

### Detaillierte Beschreibung von Ausführungsbeispielen

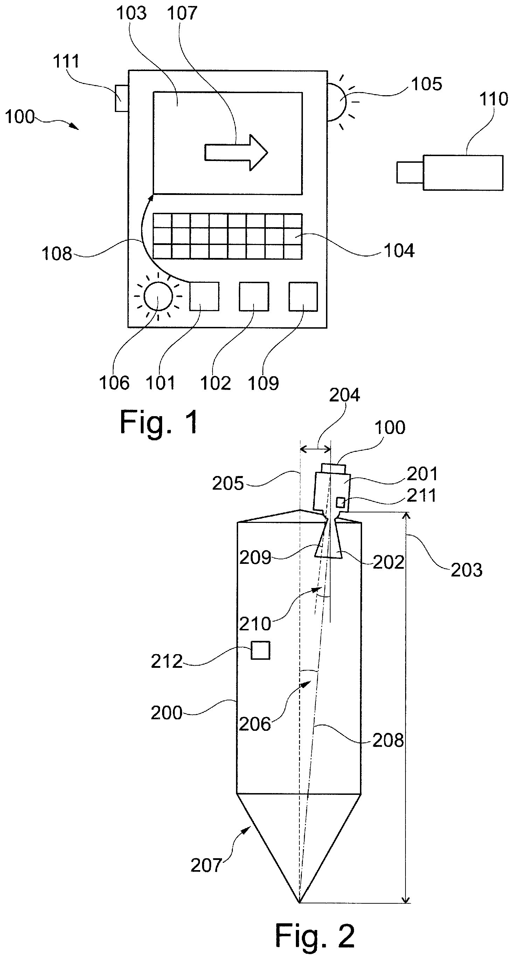

In Fig. 1 ist eine tragbare Vorrichtung 100 zum Ausrichten eines Füllstandmessgerätes an einem Behälter dargestellt. Die tragbare Vorrichtung 100 weist einen Prozessor 101, einen in der tragbaren Vorrichtung integrierten Neigungssensor 102 sowie eine Anzeigevorrichtung 103 auf.

Der Prozessor 101 der tragbaren Vorrichtung 100 ist dazu ausgeführt, zum Feststellen einer Neigung des Füllstandmessgerätes mittels des Neigungssensors 102 eine Neigung der tragbaren Vorrichtung 100 zu bestimmen, wenn die tragbare Vorrichtung 100 an dem Füllstandmessgerät anliegt. Ferner ist der Prozessor 101 dazu ausgeführt, eine Abmessung des Behälters und eine relative Position des Füllstandmessgerätes zu dem Behälter festzustellen. Dieses Feststellen der Abmessung des Behälters und/oder der relativen Position des Füllstandmessgerätes zu dem Behälter kann beispielsweise durch eine Benutzereingabe mittels der Eingabevorrichtung 104, welche in diesem Ausführungsbeispiel als Tastatur ausgeführt ist, erfolgen. Ferner kann das Feststellen der Abmessung des Behälters und/oder der relativen Position des Füllstandmessgerätes zu dem Behälter durch Scannen eines Codes mittels der Scaneinheit 105, die beispielsweise als Kamera oder als Strichcodescanner ausgeführt ist, erfolgen. In einer Speichereinheit 109 der tragbaren Vorrichtung 100 kann eine Datenbank gespeichert sein, in der verschiedene Behältergeometrien, Abmessungen von Behältern sowie relative Positionen für installierte Füllstandmessgeräte gespeichert sind und einem jeweiligen Code zugeordnet sind. Nachdem der Code eingescannt wurde, kann der Prozessor 101 in der auf der Speichereinheit 109 gespeicherten Datenbank die Abmessung des Behälters und/oder die relative Position des Füllstandmessgerätes zu dem Behälter abfragen.

Der Prozessor 101 ist außerdem dazu ausgeführt, basierend auf der Abmessung des Behälters, der relativen Position des Füllstandmessgerätes zu dem Behälter und der Neigung des Füllstandmessgerätes eine erforderliche Änderung einer Ausrichtung des Füllstandmessgerätes zu bestimmen. Zur Bestimmung der erforderlichen Änderung mag ein einzustellender Neigungswinkel oder ein Soll-Neigungswinkel mit einem aktuellen Neigungswinkel oder einem Ist-Neigungswinkel verglichen werden. Der Soll-Neigungswinkel kann aus der Abmessung des Behälters ermittelt werden, während der Ist-Neigungswinkel im Wesentlichen direkt von dem Neigungssensor 102 bestimmt werden mag. Ferner ist der Prozessor 101 dazu ausgeführt, ein Signal 108 für eine Ausgabe 107 der bestimmten erforderlichen Änderung der Ausrichtung des Füllstandmessgerätes an die Anzeigevorrichtung zu übertragen. Beispielsweise kann der Prozessor 101 ein elektrisches Signal 108 an die Anzeigevorrichtung 103 übertragen. Basierend auf dem Signal 108 kann die Anzeigevorrichtung beispielsweise einen Pfeil 107 darstellen, der angibt, in welche Richtung das Füllstandmessgerät geneigt werden soll, um korrekt ausgerichtet zu sein. Die tragbare Vorrichtung kann ferner auch einen Lautsprecher 106 aufweisen, der die erforderliche Änderung der Ausrichtung des Füllstandmessgerätes durch ein akustisches Signal ausgibt. Beispielsweise kann das akustische Signal darin bestehen, dass ein ausgegebener Ton lauter oder leiser wird, wenn das Füllstandmessgerät die korrekte Ausrichtung erreicht.

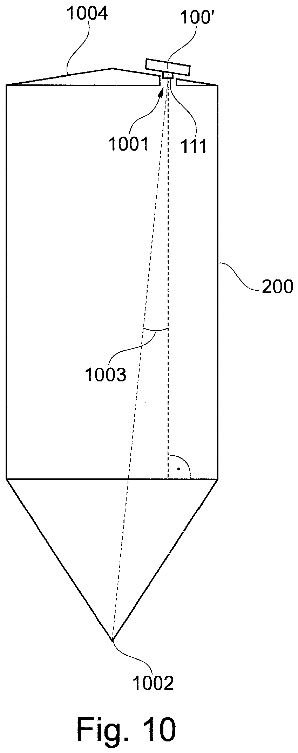

Alternativ ist der Prozessor 101 dazu ausgeführt, einen einzustellenden Neigungswinkel des Füllstandmessgerätes, wie beispielsweise im Kontext von Fig. 10 beschrieben, direkt zu bestimmen. Anschließend kann der Prozessor 101 basierend auf dem einzustellenden Neigungswinkel des Füllstandmessgerätes und der aktuellen Neigung des Füllstandmessgerätes eine erforderliche Änderung der Ausrichtung des Füllstandmessgerätes bestimmen.

Mit anderen Worten kann die erforderliche Änderung der Ausrichtung des Füllstandmessgerätes statt mittels der Abmessung des Behälters mittels des direkten Vergleichs des einzustellenden Neigungswinkels mit dem aktuellen Neigungswinkel berechnet werden.

Der einzustellende Neigungswinkel kann mittels der tragbaren Vorrichtung 100 bestimmt werden. Die tragbare Vorrichtung kann hierfür eine Kamera 111 aufweisen, mit welcher ein Bild zum Anpeilen eines gewünschten Punktes des Behälters erzeugt werden kann. Ferner kann der Prozessor 101 dazu ausgeführt sein, eine Zielmarkierung in dem Bild zu erzeugen, damit der gewünschte Punkt mit der Zielmarkierung angepeilt werden kann. Wenn der gewünschte Punkt angepeilt ist, kann der Prozessor den momentanen Neigungswinkel aus dem Neigungssensor 102 auslesen und als einzustellenden Neigungswinkel verwenden.
Für den Fall der indirekten Bestimmung des einzustellenden Neigungswinkels bzw. des Soll-Neigungswinkels, z.B. über eine Feststellung der Abmessung des Behälters, kann die Kamera 111 weggelassen werden.

Ferner ist in Fig. 1 ein computerlesbares Medium 110 gemäß einem Ausführungsbeispiel der Erfindung dargestellt, auf welchem ein Programmelement gespeichert ist, das den Prozessor 101 der tragbaren Vorrichtung 100 anleitet, das erfindungsgemäße Verfahren durchzuführen.

In Fig. 2 ist ein Behälter 200 sowie ein Füllstandmesssystem aufweisend ein Füllstandmessgerät 201 sowie eine tragbare Vorrichtung 100 gemäß einem Ausführungsbeispiel der Erfindung dargestellt. Der Behälter 200 ist beispielsweise ein Schüttgutbehälter, der eine zylindrische Form mit einem unten spitz zulaufenden Ende 207 aufweist. Dieser Behälter 200 ist um die Mittelachse 205 rotationssymmetrisch ausgebildet. Ferner weist der Behälter 200 eine Höhe 203 auf. An dem Behälter 200 ist ein Füllstandmessgerät 201 montiert, welches einen Abstand 204 von der Mittelachse 205 oder Bezugslinie 205 des Behälters 200 aufweist. Dies kann beispielsweise daran liegen, dass in der Mitte des oberen Endes des Behälters 200 eine Einlassöffnung des Behälters 200 angeordnet ist. Das Füllstandmessgerät 201 weist dabei bereits den korrekten Neigungswinkel 206 auf, so dass die von der Antenne 202 des Füllstandmessgerätes 201 ausgesendeten Messsignale bis an das unterste Ende des Behälters 200 ausgesendet werden können. Auf diese Weise kann der Füllstand des Behälters 200 bis zum untersten Ende des spitz zulaufenden Endes 207 des Behälters 200 ermittelt werden. Der richtige Neigungswinkel 206 beträgt Arctan[(Abstand 204)/(Höhe 203)]. Dabei bezeichnet die gestrichelte Linie 208 die Ausrichtung oder Orientierung des Füllstandmessgerätes bzw. die Richtung der Ausbreitung des von dem Füllstandmessgerät 201 ausgesendeten Messsignals. Diese Ausrichtung 208 des Füllstandmessgeräts kann mit einer Längsachse des Füllstandmessgeräts zusammen fallen. Das Ausrichten oder Einstellen der Ausrichtung 208 des Füllstandmessgerätes 201 kann beispielsweise mithilfe der tragbaren Vorrichtung 100 erfolgen. Dafür wird die tragbare Vorrichtung 100 an eine Fläche des Füllstandmessgerätes 201 aufgelegt, welche in fester und bekannter Relation zur Antenne 202 des Füllstandmessgerätes 201 steht. In diesem Fall ist die Aufliegefläche der tragbaren Vorrichtung 100 senkrecht zur Antenne 202 bzw. zum ausgesendeten Signal der Antenne 202. Die gestrichelte Linie 209 stellt dabei die Ausrichtung bzw. die Neigung der tragbaren Vorrichtung dar. Der Winkel 210 entspricht dem Neigungswinkel der tragbaren Vorrichtung 100. Da die tragbare Vorrichtung 100 auf einer Fläche des Füllstandmessgerätes 201 aufliegt, die in fester Relation zum ausgesendeten Messsignal des Füllstandmessgerätes 201 steht, kann vom Winkel 210 auf den Neigungswinkel 206 des Füllstandmessgerätes geschlossen werden. Die Relation zwischen dem Neigungswinkel 210 der tragbaren Vorrichtung 100 und dem Neigungswinkel 206 des Füllstandmessgerätes 201 kann je nach Anlegefläche bzw. Aufliegefläche der tragbaren Vorrichtung 100 unterschiedlich sein.

Ferner sei daraufhingewiesen, dass aufgrund der vereinfachten zweidimensionalen Darstellung nur jeweils ein Neigungswinkel der tragbaren Vorrichtung bzw. des Füllstandmessgerätes gezeigt und beschrieben ist. In drei Dimensionen kann die Neigung der tragbaren Vorrichtung bzw. des Füllstandmessgerätes jedoch auch jeweils zwei Neigungswinkel umfassen.

An dem Behälter 200 ist ein Code 212 und an dem Füllstandmessgerät 201 ist ein Code 211 angeordnet, die beispielsweise als Strichcode oder als QR-Code ausgeführt sind. Auf diese Weise kann der Benutzer zum Ausrichten des Füllstandmessgerätes den Code 212 und/oder den Code 211 mit der tragbaren Vorrichtung 100 einscannen. Auf diese Weise kann die tragbare Vorrichtung 100 für den Behälter 200 und/oder für das Füllstandmessgerät 201 konfiguriert werden. Anschließend kann auf der Anzeigevorrichtung der tragbaren Vorrichtung 100 dargestellt werden, wie das Füllstandmessgerät richtig ausgerichtet werden soll, wenn die tragbare Vorrichtung 100 auf dem Füllstandmessgerät 201 aufliegt.

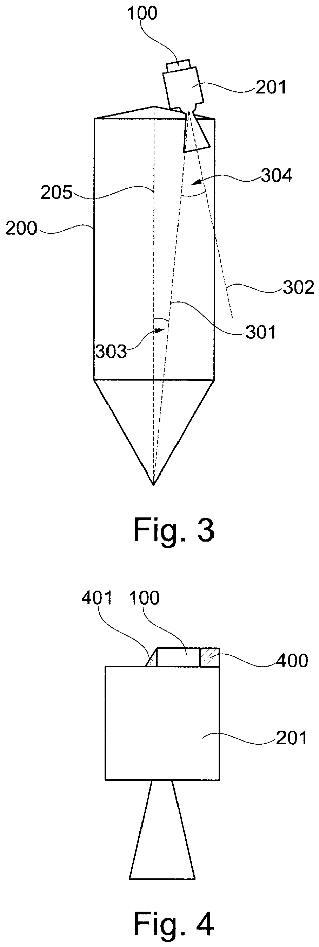

In Fig. 3 sind ein Behälter 200 sowie ein Füllstandmesssystem aufweisend ein Füllstandmessgerät 201 und ein tragbares Gerät 100 gemäß einem Ausführungsbeispiel der Erfindung dargestellt. In diesem Fall weist das Füllstandmessgerät noch nicht die korrekte Ausrichtung auf. Der Einfachheit halber sind in dieser Figur nur die Ausrichtungen bzw. Neigungswinkel des Füllstandmessgerätes 201 dargestellt und nicht auch die von der tragbaren Vorrichtung. Ferner können zur Veranschaulichung des Sachverhaltes gewisse Details überzeichnet sein.

Die Achse 205 bezeichnet wieder die Mittelachse des Behälters. Die Achse 302 bezeichnet die momentane Ausrichtung bzw. die Ist-Ausrichtung des Füllstandmessgerätes 201. Die Achse 301 bezeichnet wiederum die korrekte bzw. die erforderliche Ausrichtung des Füllstandmessgerätes, so dass das Füllstandmessgerät den Füllstand des Behälters 200 bis zum untersten Punkt der zulaufenden Spitze ermitteln kann. Der Winkel 303 entspricht dem erforderlichen Neigungswinkel des Füllstandmessgerätes, das heißt dem Soll-Neigungswinkel. Somit muss das Füllstandmessgerät 201 um den Winkel 304 geneigt werden, um die erforderliche Ausrichtung bzw. die korrekte Ausrichtung aufzuweisen. Mit anderen Worten entspricht der Winkel 304 der erforderlichen Änderung der Ausrichtung des Füllstandmessgerätes. Auf der Anzeigevorrichtung der tragbaren Vorrichtung 100 kann somit eine Information dargestellt werden, welche den Benutzer anleitet, das Füllstandmessgerät um den Winkel 304 in Richtung Mitte des Behälters zu neigen.

In Fig. 4 ist ein Füllstandmesssystem gemäß einem Ausführungsbeispiel der Erfindung dargestellt. Das Füllstandmesssystem umfasst ein Füllstandmessgerät 201 sowie eine tragbare Vorrichtung 100. Dabei weist das Füllstandmesssystem eine Aufnahmevorrichtung 400, 401 für die tragbare Vorrichtung 100 auf. In diesem Ausführungsbeispiel ist die Aufnahmevorrichtung als Anschlagskante 400 mit einer Spannvorrichtung 401 ausgeführt. Auf diese Weise kann die tragbare Vorrichtung 100 zwischen der Kante 400 und der Spannvorrichtung 401 eingespannt werden, so dass die tragbare Vorrichtung 100 eine feste Ausrichtung bezüglich des Füllstandmessgerätes 201 aufweist. Auf diese Weise kann vom Neigungswinkel der tragbaren Vorrichtung 100 auf den Neigungswinkel des Füllstandmessgerätes 201 geschlossen werden.

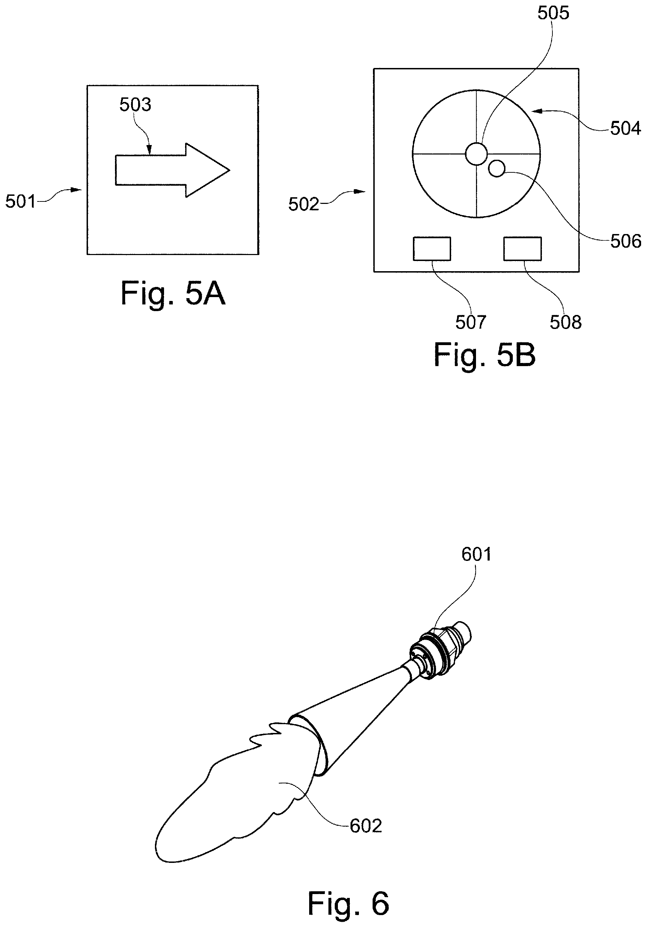

In Fig. 5A und 5B sind jeweils eine Darstellung einer Ausgabe auf einer Anzeigevorrichtung einer nicht-erfindungsgemäßen tragbaren Vorrichtung dargestellt. Dabei sei darauf hinzuweisen, dass diese Darstellungen rein beispielhaft sind und nicht als Einschränkungen anzusehen sind.

In Fig. 5A ist eine einfache Darstellung 501 der erforderlichen Änderung der Ausrichtung des Füllstandmessgerätes in Form eines Pfeils 503 dargestellt. Dieser Pfeil 503 leitet den Benutzer an, das Füllstandmessgerät in Richtung des Pfeils 503 zu schwenken. Beispielsweise kann die Größe des Pfeiles 503 von der Größe des erforderlichen Neigungswinkels abhängen. Das heißt, der Pfeil 503 kann beispielsweise kleiner dargestellt werden, wenn nur eine kleine Neigung des Füllstandmessgerätes erforderlich ist.

In Fig. 5B ist eine Darstellung 502 in Form einer Dosenlibelle 504 dargestellt. Dabei weist die Dosenlibelle 504 ein Fadenkreuz 505 sowie eine Luftblase 506 auf. Das Füllstandmessgerät muss nun derart geneigt werden, dass sich die Luftblase 506 innerhalb des Fadenkreuzes 505 bzw. mittig zum Fadenkreuz 505 befindet. Außerdem kann die Darstellung 502 noch Winkelangaben 507 und 508 aufweisen, die den erforderlichen Neigungswinkeln entsprechen.

In Fig. 6 ist die Ausbreitung eines Messsignals 602, welches von einer Antenne eines Füllstandmessgerätes ausgesendet wird, gemäß einem Ausführungsbeispiel der Erfindung dargestellt. Dabei kann dieses Messsignal 602 von einer tragbaren Vorrichtung simuliert werden. Hierfür können verschiedene Parameter des Füllstandmessgerätes 601 mit einbezogen werden, beispielsweise den Öffnungswinkel des Messsignals 602 und/oder die Größe der Antenne des Füllstandmessgerätes 601.

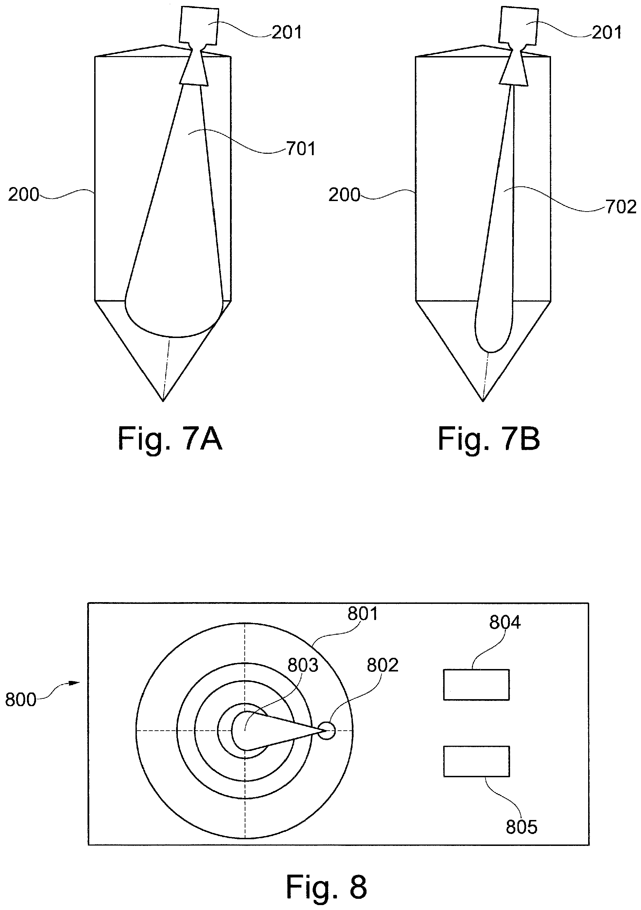

In Fig. 7A und 7B ist jeweils die Ausbreitung eines Messsignals 701, 702 in einem Behälter 200 gemäß einem Ausführungsbeispiel der Erfindung dargestellt. Dabei weist das vom Füllstandmessgerät 201 ausgesendete Messsignal 701 in Fig. 7A einen größeren Öffnungswinkel auf als das vom Füllstandmessgerät 201 ausgesendete Messsignal 702 in Fig. 7B.

In Fig. 8 ist eine Ausgabe einer Anzeigevorrichtung einer tragbaren Vorrichtung gemäß einem Ausführungsbeispiel der Erfindung dargestellt. In der Ausgabe 800 ist ein Querschnitt 801 des Behälters dargestellt. Außerdem ist die relative Position des Füllstandmessgerätes 802 zum Behälter 801 dargestellt. Ferner ist die simulierte Ausbreitung des Messsignals 803, welche von der Neigung des Füllstandmessgerätes abhängt, dargestellt. Auf diese Weise kann das Füllstandmessgerät derart geneigt werden, dass das Messsignal die gewünschte Ausbreitung aufweist. Ferner können in der Ausgabe 800 die Höhe des Behälters 804 sowie die seitliche Versetzung des Füllstandmessgerätes zur Mittelachse des Behälters 805 dargestellt sein.

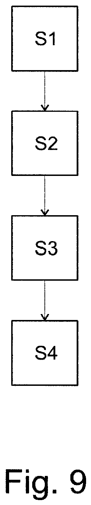

In Fig. 9 ist ein Flussdiagramm für ein Verfahren zum Ausrichten eines Füllstandmessgerätes an einem Behälter mit einer tragbaren Vorrichtung gemäß einem Ausführungsbeispiel der Erfindung dargestellt. Dabei umfasst das Verfahren den Schritt S1 des Feststellens einer Abmessung des Behälters und einer relativen Position des Füllstandmessgerätes zum Behälter durch eine tragbare Vorrichtung oder des Bestimmens eines einzustellenden Neigungswinkels des Füllstandmessgerätes an dem Behälter durch die tragbare Vorrichtung. Ferner weist das Verfahren den Schritt S2 des Feststellens eines Neigungswinkels des Füllstandmessgerätes durch Messen eines Neigungswinkels durch die an das Füllstandmessgerät aufliegende tragbare Vorrichtung auf. Außerdem erfolgt der Schritt S3 des Berechnens einer Änderung einer Ausrichtung des Füllstandmessgerätes basierend auf der Abmessung des Behälters, der relativen Position des Füllstandmessgerätes zu dem Behälter und dem Neigungswinkel des Füllstandmessgerätes oder basierend auf dem einzustellenden Neigungswinkel und dem Neigungswinkels des Füllstandmessgerätes durch die tragbare Vorrichtung. Das Verfahren umfasst ferner den Schritt S4 der Ausgabe der berechneten Änderung der Ausrichtung des Füllstandmessgerätes durch die tragbare Vorrichtung.

Gemäß einem Ausführungsbeispiel der Erfindung weist das Verfahren das Winkelmessen auf, wobei ein mobiles Ausrichtgerät oder eine tragbare Vorrichtung, z.B. ein Handy, ein Tablet, oder ein anderes mobiles bzw. tragbares Gerät, mit integrierter Kamera, integriertem Neigungssensor und einer Zielvorrichtung, z.B. einem Fadenkreuz auf einem Bildschirm, einem Sucher einer Kamera oder Ähnliches, über den Installationspunkt des Sensors bzw. des Füllstandmessgerätes an dem Behälter positioniert wird. Wenn die Zielvorrichtung bzw. die Kamera auf das Ziel gerichtet ist, wird der gemessene Winkel im mobilen Ausrichtgerät oder in der tragbaren Vorrichtung gespeichert.

Ferner weist das Verfahren das Montieren des Sensors bzw. des Füllstandmessgerätes auf, wobei der Sensor oder das Füllstandmessgerät auf dem Installationspunkt installiert wird.

Weiter erfolgt gemäß dem Verfahren das Ausrichten des Sensors oder des Füllstandmessgerätes, wobei zur Ausrichtung des Sensors oder des Füllstandmessgerätes das mobile Ausrichtgerät oder die tragbare Vorrichtung auf den montierten Sensor oder auf das Füllstandmessgerät gelegt wird. Der Sensor oder das Füllstandmessgerät wird dann ausgerichtet, z.B. gekippt und/oder verdreht, bis der Winkel des Sensors oder des Füllstandmessgerätes mit dem abgespeicherten Winkel des mobilen Ausrichtgerätes oder der tragbaren Vorrichtung übereinstimmt. Dann wird der Sensor oder das Füllstandmessgerät festgestellt oder fixiert.

Fig. 10 zeigt einen Behälter 200 mit einer tragbaren Vorrichtung 100' gemäß einem Ausführungsbeispiel der Erfindung. Die tragbare Vorrichtung 100' ist zum bestimmen eines einzustellenden Neigungswinkels 1003 eines Füllstandmessgerätes an dem Behälter 200 an einer Öffnung 1001 des Behälters angeordnet. An der Öffnung 1001 des Behälters wird später das Füllstandmessgerät angebracht. Auch wenn die Vorrichtung 100' an dem Deckel 1004 des Behälters 200 anliegend gezeichnet ist, kann die Vorrichtung 100' frei in Bezug zum Behälter 200 ausgerichtet werden, um ein gutes Anpeilen des gewünschten Punktes 1002 zu ermöglichen. Die Vorrichtung 100' mag in einem Beispiel im Wesentlichen baugleich mit der Vorrichtung 100 sein.

Mittels der Kamera 111 wird ein Bild des Behälterinnenraums aufgenommen, in welchem eine Zielmarkierung dargestellt ist, so dass ein gewünschter Punkt 1002 des Behälter 200 angepeilt werden kann. Beispielsweise handelt es sich beim gewünschten Punkt 1002 um den untersten Punkt des Behälters 200. Wenn der gewünschte Punkt 1002 des Behälters 200 angepeilt ist, kann durch Betätigen eines Bedienelements der Neigungswinkel aus dem Neigungssensor der tragbaren Vorrichtung ausgelesen und als einzustellender Neigungswinkels oder Soll-Neigungswinkel des Füllstandmessgerätes verwendet werden.

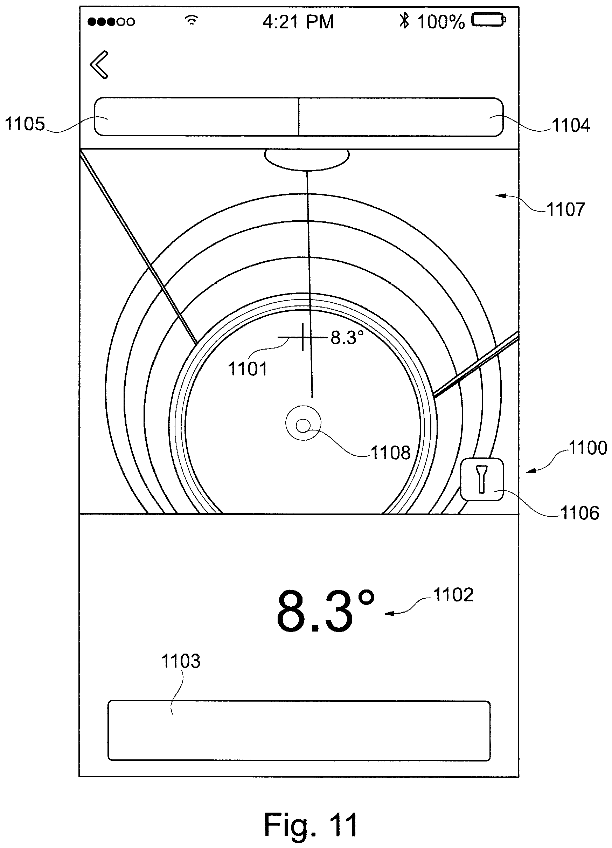

Fig. 11 zeigt ein auf einer Anzeigeeinheit einer tragbaren Vorrichtung gemäß einem Ausführungsbeispiel der Erfindung dargestellte Bildausgabe 1100. In der Bildausgabe ist eine Benutzerschnittstelle eines Programmelementes zum Bestimmen eines einzustellenden Neigungswinkels eines Füllstandmessgerätes an einem Behälter dargestellt. Die Benutzerschnittstelle ist beispielsweise als Benutzerschnittstelle für eine tragbare Vorrichtung mit einem Berührbildschirm bzw. Touchscreen ausgeführt.

Die Benutzerschnittstelle umfasst ein von einer Kamera der tragbaren Vorrichtung aufgenommenes Bild 1107 es Behälterinnenraums, wobei das Bild 1107 zum Anpeilen eines gewünschten Punktes des Behälters eine Zielmarkierung bzw. ein Fadenkreuz 1101 aufweist. Das aufgenommene Bild 1107 zeigt eine zweidimensionale Darstellung eines dreidimensionalen Behälterinnenraums, beispielsweise eines Silos. Der Behälter kann jedoch auch eine andere Form einer Aufnahmeeinrichtung, einer Bezugsebene und/oder Ablageeinrichtung sein. Beispielsweise muss der Behälter nicht zwingerdermaßen einen Deckel und/oder Seitenwände aufweisen. Das Bild 1107 und die Zielmarkierung 1101 können unabhängig voneinander beispielsweise von verschiedenen Einrichtungen und/oder Programmelementen erzeugt und überlagert sein. Im Bild ist außerdem ein Bezugspunkt 1108 dargestellt, in dessen Richtung das Füllstandmessgerät auszurichten ist. Der Bezugspunkt 1108 kann in diesem Fall ein unterster Punkt des Behälters und/oder ein Ablauf des Behälters sein. Um den einzustellenden Neigungswinkel zu ermitteln, ist die Zielmarkierung 1101 auf den Bezugspunkt 1108 zu richten. Wenn die Zielmarkierung 1101 auf den Bezugspunkt gerichtet ist bzw. den Bezugspunkt 1108 anpeilt wird, kann der momentane Neigungswinkel vom Feld 1102 abgelesen werden und mittels einer Betätigung des Bedienelements 1103 als einzustellender Neigungswinkel abgespeichert und/oder verwendet werden.

Ferner weist die Benutzerschnittstelle ein Bedienelement 1103 zum Verwenden des momentanen Neigungswinkels der tragbaren Vorrichtung als einzustellender Neigungswinkel des Füllstandmessgerätes an dem Behälter auf. Im Feld 1102 ist dabei der momentane Neigungswinkel der tragbaren Vorrichtung dargestellt. Ferner umfasst die Benutzerschnittstelle ein weiteres Bedienelement 1106 zum Aktivieren eines Leuchtelementes, z.B. einer Leuchtdiode, der tragbaren Vorrichtung zum Ausleuchten des Behälterinnenraumes beim aufnehmen des Bildes.

Ferner umfasst die Benutzerschnittstelle ein Bedienelement 1105 zum Aktivieren einer Funktion zum Eingeben einer Abmessung des Behälters sowie ein Bedienelement 1104 zum Aktivieren der in Fig. 11 aktivierten Funktion zum Bestimmen des einzustellenden Neigungswinkels. Die Funktion zum Eingeben der Abmessung des Behälters und die Funktion zum Bestimmen des einzustellenden Neigungswinkels können daher alternativ verwendet werden, um die erforderliche Ausrichtung des Füllstandmessgerätes zu bestimmen.

Ergänzend sei darauf hinzuweisen, dass "umfassend" oder "aufweisend" keine anderen Elemente ausschließt und "ein" oder "einer" keine Vielzahl ausschließt.

Bezugszeichen in den Ansprüchen sind nicht als Einschränkungen anzusehen.

## Patentansprüche

1. Tragbare Vorrichtung (100) zum Ausrichten eines Füllstandmessgerätes (201) an einem Behälter (200), die Vorrichtung aufweisend:
einen Prozessor (101);
einen Neigungssensor (102);
eine Anzeigevorrichtung (103);
wobei der Prozessor zum Feststellen einer Neigung (206) des Füllstandmessgerätes dazu ausgeführt ist, mittels des Neigungssensors eine Neigung (210) der Vorrichtung zu bestimmen, wenn die Vorrichtung an dem Füllstandmessgerät anliegt;
wobei der Prozessor dazu ausgeführt ist, eine Abmessung (203) des Behälters und eine relative Position (204) des Füllstandmessgerätes zu dem Behälter festzustellen;
**dadurch gekennzeichnet,**
**dass** der Prozessor dazu ausgeführt ist, basierend auf der Abmessung des Behälters, der relativen Position des Füllstandmessgerätes zu dem Behälter und der Neigung des Füllstandmessgerätes eine erforderliche Änderung einer Ausrichtung (304) des Füllstandmessgerätes zu bestimmen; und
**dass** der Prozessor dazu ausgeführt ist, ein Signal (108) für eine Ausgabe (107) der bestimmten erforderlichen Änderung der Ausrichtung des Füllstandmessgerätes an die Anzeigevorrichtung zu übertragen.

2. Tragbare Vorrichtung nach Anspruch 1,
wobei der Prozessor dazu ausgeführt ist, ein Signal zum Darstellen einer Richtung (503) der bestimmten erforderlichen Änderung der Ausrichtung (304) des Füllstandmessgerätes an die Anzeigevorrichtung zu übertragen.

3. Tragbare Vorrichtung nach einem der vorangehenden Ansprüche,
wobei der Prozessor (101) dazu ausgeführt ist, basierend auf der Abmessung des Behälters und der relativen Position des Füllstandmessgerätes zu dem Behälter eine Ausbreitung eines von dem Füllstandmessgerät ausgesendeten Messsignals (602) in dem Behälter zu bestimmen; und
wobei der Prozessor dazu ausgeführt ist, ein Signal zum Darstellen der bestimmten Ausbreitung des von dem Füllstandmessgerät ausgesendeten Messsignals in dem Behälter an die Anzeigevorrichtung zu übertragen.

4. Tragbare Vorrichtung nach einem der vorangehenden Ansprüche,
wobei der Prozessor dazu ausgeführt ist, einen Parameter des von dem Füllstandmessgerät ausgesendeten Messsignals festzustellen; und
wobei der Prozessor dazu ausgeführt ist, basierend auf dem Parameter des von dem Füllstandmessgerät ausgesendeten Messsignals, der Abmessung des Behälters, der relativen Position des Füllstandmessgerätes zu dem Behälter und dem Neigungswinkel des Füllstandmessgerätes die Ausbreitung des von dem Füllstandmessgerät ausgesendeten Messsignals zu simulieren.

5. Tragbare Vorrichtung nach einem der Ansprüche 3 oder 4,
wobei die bestimmte Ausbreitung des Messsignals des Füllstandmessgerätes eine Sendekeule (701, 702) des Füllstandmessgerätes umfasst; und
wobei der Prozessor dazu ausgeführt ist, der Anzeigevorrichtung ein Signal zum Darstellen der Sendekeule (803) in dem Behälter (801) an die Anzeigevorrichtung zu übertragen.

6. Tragbare Vorrichtung nach einem der vorangehenden Ansprüche, weiterhin aufweisend:
eine Eingabevorrichtung (104);
wobei der Prozessor dazu ausgeführt ist, die Abmessung des Behälters und die relative Position des Füllstandmessgerätes zu dem Behälter über eine Eingabe in die Eingabevorrichtung festzustellen.

7. Tragbare Vorrichtung nach einem der vorangehenden Ansprüche,
wobei der Prozessor dazu ausgeführt ist, die Abmessung des Behälters und/oder die relative Position des Füllstandmessgerätes zu dem Behälter durch Scannen eines Kodes (212), vorzugsweise eines Strichkodes oder eines QR-Kodes, festzustellen.

8. Tragbare Vorrichtung (100) zum Ausrichten eines Füllstandmessgerätes (201) an einem Behälter (200), die Vorrichtung aufweisend:
einen Prozessor (101);
einen Neigungssensor (102);
eine Anzeigevorrichtung (103);
wobei der Prozessor zum Feststellen einer Neigung (206) des Füllstandmessgerätes dazu ausgeführt ist, mittels des Neigungssensors eine Neigung (210) der Vorrichtung zu bestimmen, wenn die Vorrichtung an dem Füllstandmessgerät anliegt;
**dadurch gekennzeichnet,**
**dass** der Prozessor dazu ausgeführt ist, einen einzustellenden Neigungswinkel des Füllstandmessgerätes zu bestimmen;
**dass** der Prozessor dazu ausgeführt ist, basierend auf dem einzustellenden Neigungswinkel des Füllstandmessgerätes und der Neigung des Füllstandmessgerätes eine erforderliche Änderung einer Ausrichtung (304) des Füllstandmessgerätes zu bestimmen; und
**dass** der Prozessor dazu ausgeführt ist, ein Signal (108) für eine Ausgabe (107) der bestimmten erforderlichen Änderung der Ausrichtung des Füllstandmessgerätes an die Anzeigevorrichtung zu übertragen.

9. Tragbare Vorrichtung nach Anspruch 8, ferner aufweisend:
eine Kamera (111) zum Aufnehmen eines Bildes (1107);
ein Bedienelement (1103);
wobei der Prozessor (101) dazu ausgeführt ist, in dem Bild (1107) eine Zielmarkierung (1101) zum Anpeilen eines gewünschten Punktes des Behälters zu erzeugen;
wobei der Prozessor dazu ausgeführt ist, ein Signal zum Darstellen des Bildes mit der Zielmarkierung an die Anzeigevorrichtung zu übertragen; und
wobei der Prozessor dazu ausgeführt ist, bei Betätigung des Bedienelementes einen momentanen Neigungswinkel der tragbaren Vorrichtung als einzustellenden Neigungswinkel zu verwenden.

10. Füllstandmesssystem, aufweisend:
eine tragbare Vorrichtung nach einem der Ansprüche 1 bis 9; und
ein Füllstandmessgerät mit einer Aufnahmevorrichtung für die tragbare Vorrichtung.

11. Verfahren zum Ausrichten eines Füllstandmessgerätes an einem Behälter mit einer tragbaren Vorrichtung, das Verfahren aufweisend die Schritte:
Feststellen einer Abmessung des Behälters und einer relativen Position des Füllstandmessgerätes zum Behälter jeweils durch die tragbare Vorrichtung oder Bestimmen eines einzustellenden Neigungswinkels des Füllstandmessgerätes an dem Behälter durch die tragbare Vorrichtung (S1);
Feststellen eines Neigungswinkels des Füllstandmessgerätes durch Messen eines Neigungswinkels durch die an dem Füllstandmessgerät aufliegende tragbare Vorrichtung (S2);
Bestimmen einer Änderung einer Ausrichtung des Füllstandmessgerätes basierend auf der Abmessung des Behälters, der relativen Position des Füllstandmessgerätes zu dem Behälter und dem Neigungswinkel des Füllstandmessgerätes durch die tragbare Vorrichtung bzw. basierend auf dem einzustellenden Neigungswinkel und dem Neigungswinkels des Füllstandmessgerätes durch die tragbare Vorrichtung (S3); und
Ausgabe der berechneten Änderung der Ausrichtung des Füllstandmessgerätes durch die tragbare Vorrichtung (S4).

12. Programmelement, das, wenn es von einem Prozessor der tragbaren Vorrichtung (100) durchgeführt wird, den Prozessor anleitet, ein Verfahren gemäß Anspruch 11 durchzuführen.

13. Computerlesbares Medium (110), auf dem ein Programmelement gespeichert ist, das, wenn es von einem Prozessor der tragbaren Vorrichtung (100) durchgeführt wird, den Prozessor anleitet, ein Verfahren gemäß Anspruch 11 durchzuführen.

14. Verwendung einer tragbaren Vorrichtung (100) nach einem der Ansprüche 1 bis 9 zur Bestimmung einer erforderlichen Änderung einer Ausrichtung (204) eines Füllstandmessgerätes (201) an einem Behälter (200).

15. Verwendung einer tragbaren Vorrichtung (100) nach einem der Ansprüche 1 bis 9 zur Bestimmung eines einzustellenden Neigungswinkels eines Füllstandmessgerätes (201) an einem Behälter (200).

## Claims

1. A portable device (100) for orienting a level measuring instrument (201) on a container (200), the device comprising:
a processor (101);
a tilt sensor (102);
a display device (103);
wherein the processor is configured to determine an inclination (206) of the level measuring instrument by using the tilt sensor to determine an inclination (210) of the device when the device is touching the level measuring instrument;
wherein the processor is configured to determine a dimension (203) of the container and a position (204) of the level measuring instrument relative to the container; **characterized in that**
the processor is configured to determine a required alteration in an orientation (304) of the level measuring instrument on the basis of the dimension of the container, the position of the level measuring instrument relative to the container and the inclination of the level measuring instrument; and
the processor is configured to transmit to the display device a signal (108) for outputting (107) the determined required alteration in the orientation of the level measuring instrument.

2. The portable device according to claim 1,
wherein the processor is configured to transmit to the display device a signal for displaying a direction (503) of the determined required alteration in the orientation (304) of the level measuring instrument.

3. The portable device according to any of the preceding claims,
wherein the processor (101) is configured to determine a propagation in the container of a measurement signal (602) emitted by the level measuring instrument on the basis of the dimension of the container and the position of the level measuring instrument relative to the container; and
wherein the processor is configured to transmit to the display device a signal for displaying the determined propagation in the container of the measurement signal emitted by the level measuring instrument.

4. The portable device according to any of the preceding claims,
wherein the processor is configured to determine a parameter of the measurement signal emitted by the level measuring instrument; and
wherein the processor is configured to simulate the propagation of the measurement signal emitted by the level measuring instrument on the basis of the parameter of the measurement signal emitted by the level measuring instrument, the dimension of the container, the position of the level measuring instrument relative to the container and the angle of inclination of the level measuring instrument.

5. Portable device according to any of claims 3 or 4,
wherein the determined propagation of the measurement signal of the level measuring instrument comprises a transmit lobe (701, 702) of the level measuring instrument; and
wherein the processor is configured to transmit to the display device a signal for displaying the transmit lobe (803) in the container (801).

6. The portable device according to any of the preceding claims, further comprising:
an input device (104);
wherein the processor is configured to determine the dimension of the container and the position of the level measuring instrument relative to the container by means of an input into the input device.

7. Portable device according to any of the preceding claims,
wherein the processor is configured to determine the dimension of the container and/or the position of the level measuring instrument relative to the container by scanning a code (212), preferably a barcode or a QR code.

8. A portable device (100) for orienting a level measuring instrument (201) on a container (200), which device comprises:
a processor (101);
a tilt sensor (102);
a display device (103);
wherein the processor is configured to determine an inclination (206) of the level measuring instrument by using the tilt sensor to determine an inclination (210) of the device when the device is touching the level measuring instrument; **characterized in that**
the processor is configured to determine an angle of inclination to be set for the level measuring instrument;
the processor is configured to determine a required alteration in an orientation (304) of the level measuring instrument on the basis of the angle of inclination to be set of the level measuring instrument and the inclination of the level measuring instrument; and
the processor is configured to transmit to the display device a signal (108) for outputting (107) the determined required alteration in the orientation of the level measuring instrument.

9. The portable device according to claim 8, also comprising:
a camera (111) for capturing an image (1107);
a control element (1103);
wherein the processor (101) is configured to generate in the image (1107) a target marker (1101) for aiming at a desired point of the container;
wherein the processor is configured to transmit to the display device a signal for displaying the image containing the target marker; and
wherein the processor is configured to use, on actuation of the control element, a current angle of inclination of the portable device as the angle of inclination to be set.

10. A level measuring system comprising:
a portable device according to any of claims 1 to 9; and
a level measuring instrument having a mounting device for the portable device.

11. A method for using a portable device to orient a level measuring instrument on a container, which method comprises the steps:
the portable device determining a dimension of the container and a position of the level measuring instrument relative to the container, or the portable device determining an angle of inclination to be set for the level measuring instrument on the container (S1);
determining an angle of inclination of the level measuring instrument by using the portable device, which is touching the level measuring instrument, to measure an angle of inclination (S2);
the portable device determining an alteration in an orientation of the level measuring instrument on the basis of the dimension of the container, the position of the level measuring instrument relative to the container and the angle of inclination of the level measuring instrument, or on the basis of the angle of inclination to be set and the angle of inclination of the level measuring instrument (S3); and
the portable device outputting the calculated alteration in the orientation of the level measuring instrument (S4).

12. A program element which, when executed by a processor of the portable device (100), instructs the processor to perform a method according to claim 11.

13. Computer-readable medium (110) on which is stored a program element which, when executed by a processor of the portable device (100), instructs the processor to perform a method according to claim 11.

14. Use of a portable device (100) according to any of the claims 1 to 9 to determine a required alteration in an orientation (204) of a level measuring instrument (201) on a container (200).

15. Use of a portable device (100) according to any of the claims 1 to 9 to determine an angle of inclination to be set for a level measuring instrument (201) on a container (200).

## Revendications

1. Dispositif portatif (100) pour orienter un appareil de mesure de niveau de remplissage (201) sur un récipient (200), le dispositif présentant :
un processeur (101) ;
un capteur d'inclinaison (102) ;
un dispositif d'affichage (103) ;
dans lequel le processeur est conçu, afin d'établir une inclinaison (206) de l'appareil de mesure de niveau de remplissage, pour déterminer au moyen du capteur d'inclinaison une inclinaison (210) du dispositif lorsque le dispositif repose sur l'appareil de mesure de niveau de remplissage ;
dans lequel le processeur est conçu pour établir une dimension (203) du récipient et une position relative (204) de l'appareil de mesure de niveau de remplissage par rapport au récipient ;
**caractérisé en ce**
**que** le processeur est conçu pour déterminer un changement nécessaire d'une orientation (304) de l'appareil de mesure de niveau de remplissage sur la base de la dimension du récipient, de la position relative de l'appareil de mesure de niveau de remplissage par rapport au récipient et de l'inclinaison de l'appareil de mesure de niveau de remplissage ; et
**que** le processeur est conçu pour transmettre au dispositif d'affichage un signal (108) pour une sortie (107) du changement nécessaire déterminé de l'orientation de l'appareil de mesure de niveau de remplissage.

2. Dispositif portatif selon la revendication 1,
dans lequel le processeur est conçu pour transmettre au dispositif d'affichage un signal pour représenter une direction (503) du changement d'orientation nécessaire déterminé (304) de l'appareil de mesure de niveau de remplissage.

3. Dispositif portatif selon l'une des revendications précédentes,
dans lequel le processeur (101) est conçu pour déterminer, sur la base de la dimension du récipient et de la position relative de l'appareil de mesure de niveau de remplissage par rapport au récipient, une propagation d'un signal de mesure (602) émis par l'appareil de mesure de niveau dans le récipient ; et
dans lequel le processeur est conçu pour transmettre au dispositif d'affichage un signal pour représenter la propagation déterminée du signal de mesure émis par l'appareil de mesure de niveau de remplissage dans le récipient.

4. Dispositif portatif selon l'une des revendications précédentes,
dans lequel le processeur est conçu pour établir un paramètre du signal de mesure émis par l'appareil de mesure de niveau de remplissage ; et
dans lequel le processeur est conçu pour simuler, sur la base du paramètre du signal de mesure émis par l'appareil de mesure de niveau de remplissage, de la dimension du récipient, de la position relative de l'appareil de mesure de niveau de remplissage par rapport au récipient et de l'angle d'inclinaison de l'appareil de mesure de niveau de remplissage, la propagation du signal de mesure émis par l'appareil de mesure de niveau de remplissage.

5. Dispositif portatif selon l'une des revendications 3 ou 4,
dans lequel la propagation déterminée du signal de mesure de l'appareil de mesure de niveau de remplissage comprend un lobe d'émission (701, 702) de l'appareil de mesure de niveau de remplissage ; et
dans lequel le processeur est conçu pour transmettre au dispositif d'affichage un signal pour représenter le lobe d'émission (803) dans le récipient (801).

6. Dispositif portatif selon l'une des revendications précédentes, présentant en outre :
un dispositif d'entrée (104) ;
dans lequel le processeur est conçu pour établir la dimension du récipient et la position relative de l'appareil de mesure de niveau de remplissage par rapport au récipient via une entrée dans le dispositif d'entrée.

7. Dispositif portatif selon l'une des revendications précédentes,
dans lequel le processeur est conçu pour établir la dimension du récipient et/ou la position relative de l'appareil de mesure de niveau de remplissage par rapport au récipient en scannant un code (212), de préférence un code à barres ou un code QR.

8. Dispositif portatif (100) pour orienter un appareil de mesure de niveau de remplissage (201) sur un récipient (200), le dispositif présentant :
un processeur (101) ;
un capteur d'inclinaison (102) ;
un dispositif d'affichage (103) ;
dans lequel le processeur est conçu, afin d'établir une inclinaison (206) de l'appareil de mesure de niveau de remplissage, pour déterminer au moyen du capteur d'inclinaison une inclinaison (210) du dispositif lorsque le dispositif repose sur l'appareil de mesure de niveau de remplissage ;
**caractérisé en ce**
**que** le processeur est conçu pour déterminer un angle d'inclinaison à régler de l'appareil de mesure de niveau de remplissage ;
**que** le processeur est conçu pour déterminer un changement nécessaire d'une orientation (304) de l'appareil de mesure de niveau de remplissage sur la base de l'angle d'inclinaison à régler de l'appareil de mesure de niveau de remplissage et de l'inclinaison de l'appareil de mesure de niveau de remplissage ; et
**que** le processeur est conçu pour transmettre au dispositif d'affichage un signal (108) pour une sortie (107) du changement nécessaire déterminé de l'orientation de l'appareil de mesure de niveau de remplissage.

9. Dispositif portatif selon la revendication 8, présentant en outre :
une caméra (111) pour capturer une image (1107) ;
un élément de commande (1103) ;
dans lequel le processeur (101) est conçu pour générer dans l'image (1107) un repère cible (1101) pour viser un point souhaité du récipient ;
dans lequel le processeur est conçu pour transmettre au dispositif d'affichage un signal pour représenter l'image avec le repère cible ; et
dans lequel le processeur est conçu pour utiliser un angle d'inclinaison momentané du dispositif portatif comme angle d'inclinaison à régler lors de l'actionnement de l'élément de commande.

10. Système de mesure de niveau de remplissage, présentant :
un dispositif portatif selon l'une des revendications 1 à 9 ; et
un appareil de mesure de niveau de remplissage avec un dispositif de réception pour le dispositif portatif.

11. Procédé pour orienter un appareil de mesure de niveau de remplissage sur un récipient avec un dispositif portatif, le procédé présentant les étapes consistant à :
établir respectivement une dimension du récipient et une position relative de l'appareil de mesure de niveau de remplissage par rapport au récipient par le dispositif portatif ou établir un angle d'inclinaison à régler de l'appareil de mesure de niveau de remplissage sur le récipient par le dispositif portatif (S1) ;
établir un angle d'inclinaison de l'appareil de mesure de niveau de remplissage par mesure d'un angle d'inclinaison par le dispositif portatif (S2) reposant sur l'appareil de mesure de niveau de remplissage ;
déterminer un changement d'une orientation de l'appareil de mesure de niveau de remplissage sur la base de la dimension du récipient, de la position relative de l'appareil de mesure de niveau de remplissage par rapport au récipient et de l'angle d'inclinaison de l'appareil de mesure de niveau de remplissage par le dispositif portatif, respectivement sur la base de l'angle d'inclinaison à régler et de l'angle d'inclinaison de l'appareil de mesure de niveau de remplissage par le dispositif portatif (S3) ; et
délivrer le changement calculé de l'orientation de l'appareil de mesure de niveau de remplissage par le dispositif portatif (S4) .

12. Élément de programme qui, lorsqu'il est exécuté par un processeur du dispositif portatif (100), amène le processeur à exécuter un procédé selon la revendication 11.

13. Support lisible par ordinateur (110) sur lequel est stocké un élément de programme qui, lorsqu'il est exécuté par un processeur du dispositif portatif (100), amène le processeur à exécuter un procédé selon la revendication 11.

14. Utilisation d'un dispositif portatif (100) selon l'une des revendications 1 à 9 pour déterminer un changement nécessaire d'une orientation (204) d'un appareil de mesure de niveau de remplissage (201) sur un récipient (200).

15. Utilisation d'un dispositif portatif (100) selon l'une des revendications 1 à 9 pour déterminer un angle d'inclinaison à régler d'un appareil de mesure de niveau de remplissage (201) sur un récipient (200).
